# EUROPEAN PATENT APPLICATION

(11) **EP 2 161 874 A1**
(43) Date of publication of application: **10.03.2010**
(21) Application number: 08734095.6
(22) Date of filing: 17.04.2008
(51) Int. Cl.: H04L 12/14

(54) **SERVICE CHARGING METHOD, DEVICE, SYSTEM AND SERVICE MANAGEMENT DEVICE**

(30) Priority: 14.07.2007 CN 200710137212
(71) Applicant: Huawei Technologies Co., Ltd., Longgang District, Shenzhen Guangdong 518129 (CN)
(72) Inventor: YAN, Xuesong, Guangdong 518129 (CN); ZHANG, Weixing, Guangdong 518129 (CN); ZHAO, Linhua, Guangdong 518129 (CN)
(74) Representative: Körber, Martin Hans
(86) International application number: PCT/CN2008/070737
(87) International publication number: WO 2009/009970

(57) **Abstract**

A service charging method is provided. The method includes: a data service management device receiving the current communication service scene information of a user forwarded by a service engine/gateway; and based on the current communication service scene information of the user, in the corresponding relationship of the prestored communication service scene and the charging priorities for the various accounts, searching for the priorities information for charging in the various accounts, the various accounts including the various free accounts of the user; based on the searched priorities information, charging for the prestored various accounts of the user in order, and forwarding a charging result to the intelligent network; based on the charging result forwarded, deducting the cost of the prestored various accounts of the user in order by the intelligent network. A service charging device and system and a service management device are also provided.

## Description

This application claims the benefit of Chinese patent application 200710137212.4, titled "METHOD AND SYSTEM FOR CHARGING FOR BONUS DATA SERVICE, AND DATA SERVICE MANAGEMENT DEVICE", filed with the Chinese Patent Office on July, 14 2007, which is incorporated hereby in its entirety.

### FIELD OF THE INVENTION

The present invention relates to charging technologies in the field of telecommunications, and in particular to a service charging method, apparatus and system, and a service management device.

### BACKGROUND OF THE INVENTION

At present, data services basically include Short Messaging Service Point-to-Point (SMS P2P), Multimedia Messaging Service Point-to-Point (MMS P2P) and some pure flow services. Content data services basically include some value-added services associated with Service Providers (SPs). For example, Short Messaging Service Point-to-Application (SMS P2A), Multimedia Messaging Service Point-to-Application (MMS P2A) and some streaming media services are content data services.

Generally, the charging for data services is on a per-SMS basis, or based on the flow of data. The rates of basic data services are relatively fixed. Thus data services are usually sold in a package with voice services. For example, if a user adds a refill amount more than a certain value, or the airtime that the user has used crosses a threshold, the user will be given a corresponding SMS P2P or MMS P2P bonus. Generally, content data services are billed based on their contents, lengths of time, access numbers (SP identifiers), etc. The charging rules of content data services are more complex, therefore content data services are not often sold in a package with voice services, compared with basic data services.

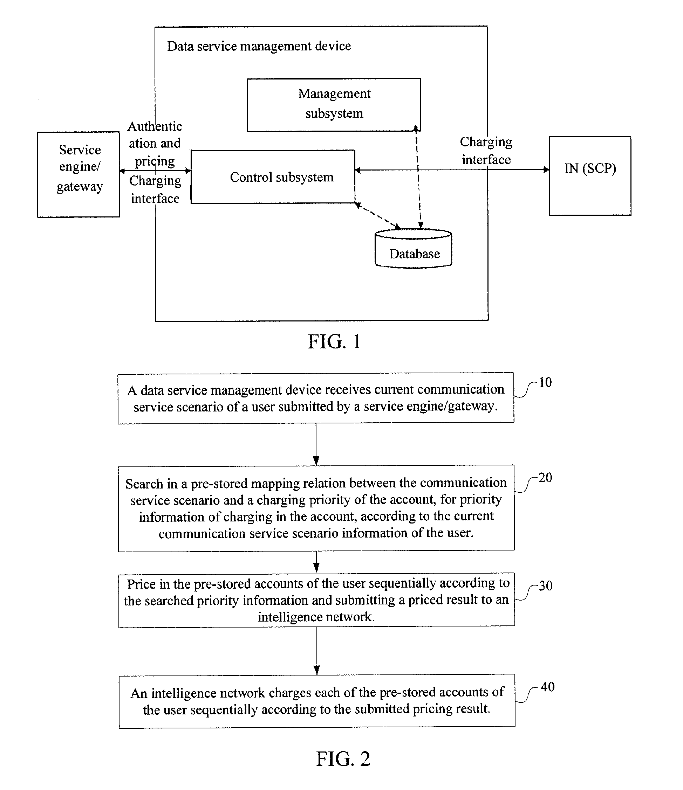

Figure 1 is a structural diagram of a system in the prior art for charging for a data service. The service engine or gateway is used to support data service processes and trigger authentication and charging events. For example, in the case the service engine or gateway is an SMS gateway, the SMS gateway first triggers a data service management device to authenticate and charge, and sends an SMS to a user upon successful charging. The data service management device includes a management subsystem, a control subsystem and a database (DB). The database stores users' account information, charging rules, etc. The management subsystem is used to manage data service fees, controlling the subsystem to price the data service according to the charging rules and submitting a pricing result to a Service Control Point (SCP) at an Intelligence Network (IN). The SCP at the IN can carry out user account management, and real-time charging for voice and data communication processes according to the pricing result submitted by the data service management device.

According to the above data service charging system, multiple interactions between the data service management device and the SCP at the IN are required to complete the process of charging a user who is offered a data service bonus. For example, a user is given a 10K data usage bonus for using 300 minutes of airtime. And suppose the data usage by the user in a data service communication is 11K. The data service management device prices the data service communication at 10 Yuan based on the 11k data usage, and submits the pricing result to the SCP at the IN. Based on the user's account information, the SCP at the IN finds that the user is entitled to 10K free data usage, thus requests the data service management device to reprice the 1K data usage that is not free. The data service management device prices the 1K data usage at 1.5 Yuan, and resubmits the pricing result to the SCP at the IN. The SCP at the IN charges a basic account of the user 1.5 Yuan according to the pricing result submitted by the data service management device, thereby completing the charging process.

As can be seen form the above description that, complex interactions between a data service management device and an SCP at an IN are required for charging a user having a data service bonus based on the existing data service charging system. Performances of the IN and the data service management device are affected.

### SUMMARY OF THE INVENTION

Embodiments of the present invention provide a service charging method, apparatus and system to simplify the process for charging a user having a data service bonus and improve performances of a data service management device and an IN.

Correspondingly, an embodiment of the invention further provides a data service management device.

An embodiment of the invention provides a method for charging for a bonus data service, including: receiving submitted current communication service scenario information of a user; searching for priority information of charging in an account of the user, in a pre-stored mapping relation between a communication service scenario and a charging priority of the account, according to the current communication service scenario information of the user, the account including an account of the user which is for free; pricing, in the pre-stored account of the user according to the found priority information, and submitting a priced result to an intelligence network; and charging, by the intelligence network, the pre-stored account of the user sequentially according to the submitted priced result..

Correspondingly, an embodiment of the invention further provides a data service management device including: a database configured to store information of an account of a user and a mapping relation between a communication service scenario and charging priority of the account, the account including a free account of the user; a service scenario information receipt unit configured to receive current communication service scenario information of the user submitted by a service engine or gateway; a search unit configured to search for priority information of charging in the account, in the mapping relation between the communication service scenario and the charging priority of the account, according to the communication service scenario information received by the service scenario information receipt unit; and a pricing and submitting unit configured to price the account of the user stored at the database sequentially according to the priority information searched by the search unit, and submit a priced result to an intelligence network, so that the intelligence network charges the pre-stored account of the user sequentially according to the submitted priced result.

Correspondingly, an embodiment of the invention further provides a system for charging for a service, including: a service engine or gateway configured to submit current communication service scenario information of a user; a data service management device configured to search for priority information of charging in an account, in a pre-stored mapping relation between a communication service scenario and a charging priority of the account, according to the current communication service scenario information of the user, the account including a free account of the user, to price in the pre-stored account of the user sequentially according to the searched priority information, and to submit a priced result to an intelligence network; and the intelligence network configured to charge the pre-stored account of the user sequentially according to the priced result submitted by the data service management device.

Correspondingly, an embodiment of the invention further provides a charging device, including: a pricing information receipt unit configured to receive priced result information submitted by a data service management device, the priced result being acquired by the data service management device searching for priority information of charging in an account, in a pre-stored mapping relation between a communication service scenario and a charging priority of the account, according to current communication service scenario information of a user, and pricing in the pre-stored account of the user sequentially according to the searched priority information; and a charging processing unit configured to charge the pre-stored account of the user sequentially according to the priced result received by the pricing information receipt unit.

The device further includes an account information synchronization unit configured to synchronize information of the account of the user stored at the device to the data service management device.

The device further includes an account information update instruction unit configured to instruct the data service management device to update the information of the account of the user when the information of the account of the user changes.

With the solutions according to the embodiments of the invention, free services and non-free services can be priced at one time by the data service management device, and free services and non-free services can be charged at one time by the IN based on the pricing results. Therefore the process of charging a user having a data service bonus is simplified, and the number of interactions between the data service management device and the IN is reduced, thereby improving performances of the data service management device and the IN.

### BRIEF DESCRIPTION OF THE DRAWINGS

Figure 1 is a structural diagram of a system in the prior art for charging for a data service ;
Figure 2 is a flow chart of the principle of a method for charging for a bonus data service according to an embodiment of the invention;
Figure 3 is a structural diagram of an embodiment of a data service charging system in which a method according to the present invention is implemented;
Figure 4 illustrates account information synchronization flow, account information updating flow and charging rule configuration flow of the system illustrated in Figure 3;
Figure 5 illustrates a process of charging a user having a data service bonus;
Figure 6 is a block diagram of a system for charging for a bonus data service in which a method according to the present invention is implemented; and
Figure 7 is a block diagram of an embodiment of a device for charging for a bonus data service according to the invention.

### DETAILED DESCRIPTION OF THE EMBODIMENTS

As shown in figure 2, a flow chart of a method provided by an embodiment for charging for a bonus data service includes the following steps.

In step 10, a data service management device receives current communication service scenario information of a user submitted by a service engine or a gateway. For example, while requesting the data service management device to authenticate and price a user requested data service, the service engine or gateway submits the current communication service scenario information of the user to the data service management device, including whether a calling party is roaming, type of a calling number, home of a called parity, type of service, etc. The data service management device can be any device that has data service management functions. The service engine or gateway can be any device that can submit related communication service scenario information.

In step 20, according to the current communication service scenario information of the user, based on a pre-stored mapping relation between communication service scenarios and a charging priority of an account, the data service management device searches for priority information of charging in the account, such as an account of the user which is for free, and possibly a basic account of the user.

In step 30, according to the priority information, the data service management device performs pricing sequentially in the pre-stored account, and submits a priced result to an SCP at an IN.

In step 40, according to the priced result submitted by the data service management device, the SCP at the IN performs charging sequentially in the pre-stored account.

For the above steps 30 and 40, information of multiple accounts of a user can be stored in the data service management device and the IN respectively. For example, information of the accounts (including free accounts of the user, and possibly a basic account of the user, etc) can be pre-stored at the IN. The IN synchronizes the stored information of the accounts of the user to the data service management device, which is to be information of the accounts of the user pre-stored in the data service management device. During subsequent communication processes, information of the accounts may be changed, and therefore after updating the information of the accounts stored on itself, the IN needs to timely inform the data service management device to modify stored information of the accounts. Following the instruction of the IN, the data service management device modifies the information of the accounts of the corresponding user stored on itself, so that the information of the accounts is updated.

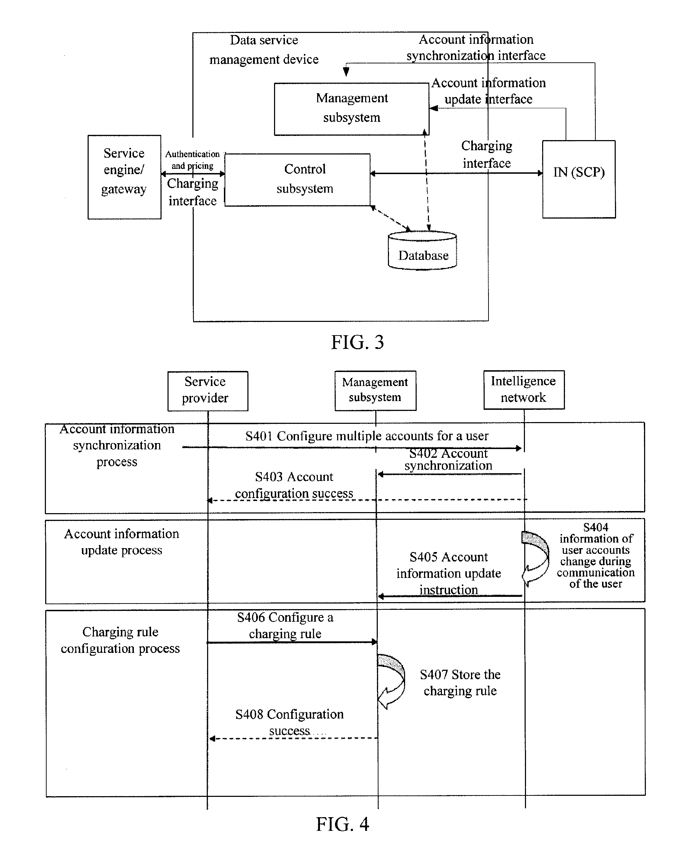

Figure 3 is a structural diagram of an embodiment of a data service charging system in which the above method is implemented. A service engine or gateway is configured to submit current communication service scenario information of a user to a data service management device. The data service management device is configured to search for priority information of charging in an account, according to the current communication service scenario information of the user, based on a pre-stored mapping relation between communication service scenarios and a charging priority of the account, including a free account of the user, and possibly a basic account of the user. The data service management device is further configured to perform pricing sequentially in the pre-stored account according to the priority information, and submit a priced result to an IN. The IN is configured to perform charging sequentially in the pre-stored account according to the priced result submitted by the data service management device.

For example, while requesting the data service management device to authenticate and price a user requested data service, the service engine or gateway can submit the current communication service scenario information of the user to the data service management device. Another embodiment is to let the priority of charging in a free account of the user greater than the priority of charging in a basic account of the user.

In order to implement the above method, two interfaces are required to be added between the data service management device and the IN in existing data service charging systems: one is an account information synchronization interface, via which the IN synchronizes information of the account stored on itself to the data service management device; the other is an account information update interface via which the IN instructs the data service management device to update stored information of the account.

Figure 4 illustrates account information synchronization flow, account information updating flow and charging rule configuration flow of the system illustrated in Figure 3. The process of account information synchronization is implemented as follows.

S401: Multiple accounts for each user are configured at an IN. A mapping relation among account name, account number, account type (including free resource account, free amount account, basic account, etc) and account description is maintained for each user, as shown in Table 1, a mapping table of information of multiple accounts configured for a user in the IN.

**Table 1**

| **Serial NO.** | **Account Name** | **Account NO.** | **Account Description** | **Account Type** |
|---|---|---|---|---|
| 1 | PRMSM | 203 | Domestic in-network free SMS (pieces) | Free resource account |
| 2 | PRMSM2 | 207 | Domestic inter-network free SMS (pieces) | Free resource account |
| 3 | PRMSM3 | 208 | International SMS (per SMS) | Free resource account |
| 4 | PrmSMMoney | 209 | SMS bonus account | Free amount account |
| ... | ... | ... | ... | ... |
| 13 | Balance | 101 | User balance | Basic account |

S402: The IN synchronizes the above configured information of accounts of the user to a management subsystem of the data service management device.

S403: The IN returns an account configuration success message to a service provider.

Furthermore, the process of account information updating can be implemented as follows.

S404: When the user uses data services or voice IN services, the IN can reduce balances of the accounts according to actual usage of the user, and change the information of the accounts, for example, by reducing the number of pieces of free SMS in the SMS bonus account, by reducing the balance in the basic account, etc.

S405: When the balances of the accounts change, the IN sends an account information update instruction to the management subsystem in the data service management device, to instruction the management subsystem in the data service management device to update stored information of the accounts. The management subsystem in the data service management device modifies accordingly the maintained information of the accounts based on the received instructive message.

Furthermore, the process of charging rule configuration can be implemented as below.

S406: A charging rule is configured in the management subsystem in the data service management device, which is a mapping relation between communication service scenarios of a user and the order of priorities of charging multiple accounts. The communication service scenario information of the user including whether a calling party is roaming, type of a calling number, whether a called party is a home service provider/other domestic service provider/international subscriber, type of service, etc. Table 2 shows two charging rules configured in the management subsystem of the data service management device.

**Table 2**

| **Rule** | **Service Scenario** | **Account Priority 1** | **Account Priority 2** | **Account Priority 3** |
|---|---|---|---|---|
| Rule 1 | SMS P2P in-network called party | Number of pieces of domestic in-network free SMS | SMS bonus account | Basic account |
| Rule 2 | SMS P2P domestic inter-network called party | Number of pieces of domestic inter-network free SMS | SMS bonus account | Basic account |

According to the rule 1 in the Table 2, when a called party is inside the network, among the multiple accounts maintained for the user, the number of pieces of domestic in-network free SMS in the domestic in-network free SMS account is subtracted before SMS bonus amount in the SMS bonus account is subtracted, and the basic account is the last to be charged. According to the rule 2, when the service scenario of the user is that in an SMS P2P service a called party is a domestic party outside the network, among the accounts maintained for the user, the number of pieces of domestic inter-network free SMS in the domestic inter-network free SMS account is subtracted before SMS bonus amount in the SMS bonus account is subtracted, and the basic account is the last to be charged. It can be seen that, according to the charging rules configured in this embodiment, the charging priority of the free account of the user are higher than that of the basic account of the user.

S407-S408: The management subsystem in the data service management device returns a charging rule configuration success message to a service provider after the above configured charging rules are stored.

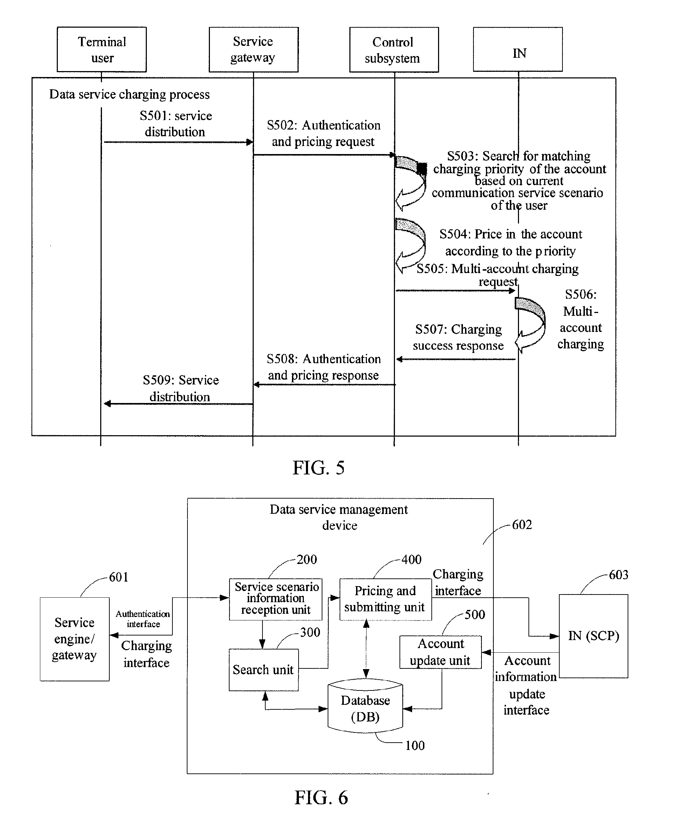

Figure 5 illustrates a process of charging a user having a data service bonus based on the configuration information illustrated in Figure 4, including the following steps.

S501: Request for distributing services. Specifically, a terminal user requests a service gateway to distribute a corresponding data service.

S502: Request for authentication and pricing. Specifically, the service gateway sends to a control subsystem in the data service management device a message requesting authentication and pricing of the data service requested by the terminal user. The message carries information, such as type of the data service requested by the user, user number, usage, which constitutes current communication service scenario information of the user.

S503: Find matching charging priorities of accounts based on the current communication service scenario information of the user. Particularly, based on a pre-stored mapping relation between communication service scenarios and priorities of charging in multiple accounts, according to current communication service scenario information of the user, the control subsystem in the data service management device finds priority information of charging in multiple accounts that matches the service scenario.

S504: Pricing process based on the priorities. Specifically, according to the matched priority information, the control subsystem in the data service management device performs pricing sequentially in the pre-stored accounts.

S505: Multi-account charging request. Specifically, the control subsystem initiates to the IN a charging request for the multiple accounts of the user according to result information of the above pricing process.

S506: Multi-account charging. Specifically, the IN performs charging sequentially in the multiple accounts of the user in response to the charging request of the control subsystem.

S507-S508: Response for charging success, then response for authentication and pricing. Specifically, the IN returns a charging success response message to the control subsystem. The control system returns an authentication and pricing success response message to the service gateway.

S509: Service distribution. Specifically, the service gateway distributes a corresponding data service to the terminal user on receipt of the authentication and pricing success response message.

An embodiment is presented hereinafter.

In this embodiment, it is assumed that two accounts are configured for an IN user (number 13688888888) in the IN: 101, a basic account of the user with a balance of 100 RMB Yuan; and 201, a data usage bonus account of a 10K data usage bonus.

The above configured account information has been synchronized by the IN to a data service management device.

It is configured in the data service management device that in a service scenario of a user using WAP, a charging rule is that the data usage bonus account is charged before the basic account.

Suppose the data usage by the user while using WAP is 11K. The data service management device finds a charging rule that matches the current service scenario of the user, which is, to charge the data usage bonus account before charging the basic account. According the charging rule, the data usage bonus account is checked first. Because the data usage bonus of the user is 10K, the basic account of the user is checked subsequently. The remaining 1K non-free data usage is priced at 1.5 Yuan. The data service management device submits the pricing result to an SCP at the IN that charging the account 201 10K and charging the account 101 1.5 Yuan. The SCP at the IN charges the two accounts of the user sequentially according to the received pricing result.

With the solution according to the embodiments , free services and non-free services can be priced at one time by the data service management device, and free services and non-free services can be charged at one time by the IN based on the pricing results. Therefore the process of charging a user having a data service bonus is simplified, and the number of interactions between the data service management device and the IN is reduced, thereby improving performances of the data service management device and the IN.

Figure 6 is a block diagram of a system for charging for a bonus data service according to an embodiment. The system includes a service engine or gateway 601, a data service management device 602, and an IN 603.

The service engine or gateway 601 is configured to submit current communication service scenario information of a user.

The data service management device 602 is configured to search for priority information of charging in an account, according to the current communication service scenario information of the user, based on a pre-stored mapping relation between communication service scenarios and a charging priority of the account. The accounts include an account of the user which is for free. The data service management device is further configured to perform pricing sequentially in the pre-stored account according to the priority information, and submit a priced result to an IN.

The IN 603 is configured to perform charging sequentially in the pre-stored accounts according to the priced result submitted by the data service management device.

Specifically, a database 100 in the data service management device 602 is stored with information of the account, and the mapping relation between communication service scenarios and the charging priority of the account. The information of the account of the user includes information of the free account of the user, and possibly information of a basic account of the user. A service scenario information receipt unit 200 is configured to receive current communication service scenario information of the user submitted by the service engine or gateway. A search unit 300 is configured to search for priority information of charging in each account, according to the communication service scenario information of the user received by the service scenario information receipt unit 200, based on the mapping relation between communication service scenarios and the charging priority of the account stored in the database 100. A pricing and submitting unit 400 is configured to perform pricing sequentially in each of the accounts stored by the database 100 according to the priority information searched by the search unit 300, and submits a priced result to an IN, so that the IN can perform charging sequentially in the pre-stored account according to the submitted priced result.

The data service management device in the embodiment further includes an account update unit 500 configured to receive an instructive message to update the information of each account sent by the IN during communication of the user, and update the information of each account according to the instructive message.

In each account of the user, the charging priority of a free account is higher than the charging priority of a basic account.

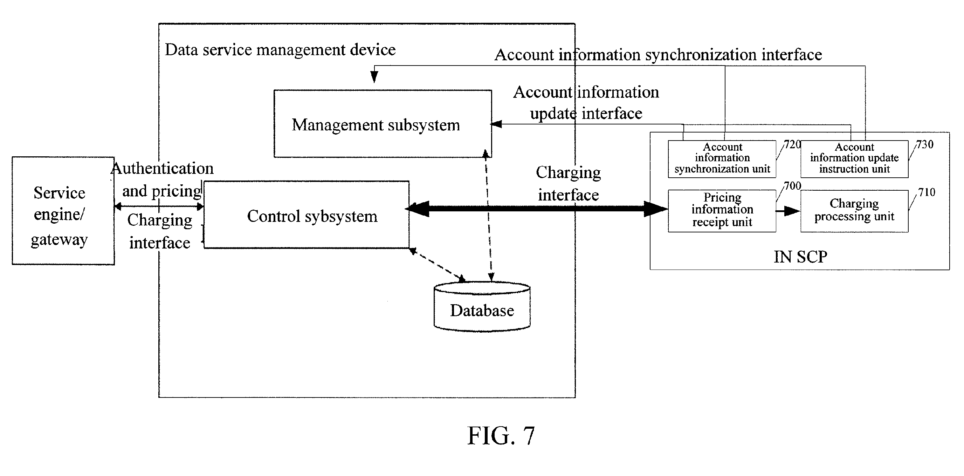

Figure 7 is a block diagram of an embodiment of a device for charging for a bonus data service according to the invention. The device can be an SCP at an IN, or another device such as multi-service control gateway, mobile data control center, and service switching and control point. Particularly, the device includes a pricing information receipt unit 700 configured to receive priced result information submitted by a data service management device, a charging processing unit 710 configured to perform charging sequentially in a pre-stored account of a user according to the priced result received by the pricing information reception unit 700, the pricing result being obtained by the data service management device searching for priority information of charging in the account, according to received current communication service scenario information of the user, based on a pre-stored mapping relation between communication service scenarios and a charging priority of the account, and performing pricing sequentially in the pre-stored account according to the priority information.

The device further includes an account information synchronization unit 720 configured to synchronize the information of each account of the user stored in the device to the data service management device; and an account information update instruction unit 730 configured to instruct the data service management device to update the information of the account of the user when the information of the account changes.

Based on the above descriptions of the embodiments, those skilled in art should understand that the present invention can be implemented by software combined with a necessary general-purpose hardware platform. The invention can also be implemented by hardware, but the former solution is better in most of the cases. Therefore, the essential , or the improvement made to the prior art can be represented by a software product stored in a storage medium including many instructions to make a computer device (such as a personal computer, a server, and a network device) to perform the methods provided by the embodiments .

As can be seen from the above description that, with the solutions according to the invention, free services and non-free services can be priced at one time by the data service management device, and free services and non-free services can be charged at one time by the IN based on the pricing results. Therefore, the process of charging a user having a data service bonus is simplified, and the number of interactions between the data service management device and the IN is reduced, thereby improving performances of the data service management device and the IN.

In addition, the service engine or gateway can submit current communication service scenario information of a user requesting a data service to the data service management device. Therefore, the data service management device can determine whether the user is allowed to use the service for free based on the current communication service scenario information of the user. For example, if only domestic SMS can use a free SMS account, when the user sends a SMS to an international user, based on the communication service scenario information of the user, the data service management device determines that sending the SMS is not free of charge. Therefore the charging process of bonus services is more accurate.

Obviously, various modifications and variations of the invention can be made by those skilled in the art without departing from the spirit and scope of the invention. Accordingly, these modifications and variations should be included in the scope of the invention, provided that the modifications and variations of the invention fall into the scope of the appended claims and equivalents thereof.

## Claims

1. A method for charging for a service, comprising:
receiving, submitted current communication service scenario information of a user;
searching for priority information of charging in an account of the user, in a pre-stored mapping relation between a communication service scenario and a charging priority of the account, according to the current communication service scenario information of the user, the account comprising an account of the user which is for free;
pricing, in the pre-stored account of the user according to the found priority information, and submitting a priced result to an intelligence network; and
charging, by the intelligence network, the pre-stored account of the user sequentially according to the submitted priced result.

2. The method according to claim 1, further comprising:
updating information of the account of the user pre-stored at the data service management device to be consistent with information of the account of the user stored at the intelligence network.

3. The method according to claim 2, further comprising:
receiving, an instructive message for updating the information of the account of the user sent by the intelligence network during communication with the user; and
updating the stored information of the account of the user according to the instructive message.

4. The method according to claim 1, wherein the communication service scenario information comprises information about whether a calling party is roaming, type of the calling party, home of a called party and type of a service.

5. The method according to claim 1, wherein the account further comprises information of a basic account of the user; and
the priority of charging in the free account is higher than the priority of charging in the basic account.

6. The method according to claim 1, wherein the current communication service scenario information of the user is submitted by a service engine or a gateway, when the service engine or the gateway requests the device to authenticate and price a data service requested by the user.

7. A data service management device, comprising:
a database, configured to store information of an account of a user and a mapping relation between a communication service scenario and a charging priority of the account, the account comprising a free account of the user;
a service scenario information receipt unit, configured to receive current communication service scenario information of the user submitted by a service engine or a gateway;
a search unit, configured to search for priority information of charging in the account of the user, in the mapping relation between the communication service scenario and the charging priority of the account, according to the communication service scenario information received by the service scenario information receipt unit; and
a pricing and submitting unit, configured to price the account of the user stored at the database sequentially according to the priority information searched by the search unit, and submit a priced result to an intelligence network, so that the intelligence network charges the pre-stored account of the user sequentially according to the submitted priced result.

8. The device according to claim 7, further comprising an account update unit, configured to receive an instructive message for updating information of the account of the user sent by the intelligence network during communication with the user, and update the information of the account of the user stored in the database according to the instructive message.

9. The device according to claim 7, wherein the account further comprises information of a basic account of the user; and
the priority of charging in the free account is higher than the priority of charging in the basic account.

10. A system for charging for a service, comprising:
a service engine or gateway, configured to submit current communication service scenario information of a user;
a data service management device, configured to search for priority information of charging in an account of the user, in a pre-stored mapping relation between a communication service scenario and a charging priority of the account, according to the current communication service scenario information of the user, wherein the account comprising a free account of the user, to price in the pre-stored account of the user sequentially according to the searched priority information, and to submit a priced result to an intelligence network; and
the intelligence network, configured to charge the pre-stored account of the user sequentially according to the priced result submitted by the data service management device.

11. The system according to claim 10, wherein the service engine or gateway submits the current communication service scenario information of the user to the data service management device when requesting the data service management device to authenticate and price a data service requested by the user.

12. The system according to claim 10, wherein the account further comprises information of a basic account of the user; and
the priority of charging in a free account is higher than the priority of charging in the basic account.

13. A charging device, comprising:
a pricing information receipt unit, configured to receive priced result information submitted by a data service management device, the priced result being acquired by the data service management device searching for priority information of charging in an account, in a pre-stored mapping relation between a communication service scenario and a charging priority of the account, according to current communication service scenario information of a user, and pricing in the pre-stored account of the user sequentially according to the searched priority information; and
a charging processing unit, configured to charge the pre-stored account of the user sequentially according to the priced result received by the pricing information receipt unit.

14. The device according to claim 13, further comprising an account information synchronization unit configured to synchronize information of the account of the user stored at the device to the data service management device.

15. The device according to claim 13, further comprising an account information update instruction unit configured to instruct the data service management device to update the information of the account of the user when the information of the account of the user changes.
